Europäisches Patentamt

European Patent Office

Office européen des brevets

(19)

(11) Veröffentlichungsnummer: **0 171 067**
**B1**

(12) **EUROPÄISCHE PATENTSCHRIFT**

(45) Veröffentlichungstag der Patentschrift: **09.01.91**

(51) Int. Cl.⁵: **G 01 P 5/00**

(21) Anmeldenummer: **85109888.9**

(22) Anmeldetag: **06.08.85**

(54) Verfahren zur Messung der Strömungsgeschwindigkeit v eines Fluids nach dem Prinzip der Phasen-Nachregelung und Differenzfrequenz-Auswertung.

(30) Priorität: **07.08.84 DE 3429099**

(43) Veröffentlichungstag der Anmeldung:
**12.02.86 Patentblatt 86/07**

(45) Bekanntmachung des Hinweises auf die
Patenterteilung:
**09.01.91 Patentblatt 91/02**

(84) Benannte Vertragsstaaten:
**AT CH DE FR GB IT LI SE**

(56) Entgegenhaltungen:
**EP-A-0 040 837**
**DE-A-3 029 140**
**DE-A-3 334 819**
**US-A-3 751 979**
**US-E- 28 929**

(73) Patentinhaber: **Siemens Aktiengesellschaft**
**Wittelsbacherplatz 2**
**D-8000 München 2 (DE)**

(72) Erfinder: **VON Jena, Alexander, Dr.**
**Oskar-von-Miller-Ring 29**
**D-8000 München 2 (DE)**

Courier Press, Leamington Spa, England.

EP 0 171 067 B1

**Beschreibung**

Die Erfindung bezieht sich auf ein Verfahren zur Messung der Strömungsgeschwindigkeit v eines Fluids nach dem Prinzip der Phasen-Nachregelung und Differenzfrequenz-Auswertung, wie es im Patentanspruch 1 angegeben ist.

Aus dem Stand der Technik, so z.B. aus der US-Patentschrift 3 751 979 und aus der DE—OS 28 828 937, sind Verfahren nach dem Prinzip der trägerseitigen Phasenregelung zur Ermittlung von Strömungsgeschwindigkeiten eines Fluids bekannt. Die Messung erfolgt mit Hilfe von kontinuierlichen Ultraschall-Signalen, die zwischen einem ersten Ultraschall-Wandler und einem zweiten Ultraschall-Wandler, die zusammen die Meßstrecke bilden, das Fluid in einer solchen Richtung so durchlaufen, daß eine Komponente der Laufrichtung der Ultraschall-Strahlung parallel der Richtung der zu messenden Strömung des Fluids ist. Da auf den Ultraschall bei Messung in Richtung der Strömung und entgegengesetzt dazu eine zusätzliche Fortpflanzungskomponente einwirkt, ergibt sich für den Ultraschall jeweils eine Phasenverschiebung zwischen Sende- und Empfangssignal bzw. eine Verkürzung und eine Vergrößerung der Schallwellenlänge in dem strömenden Fluid. Die Wellenlängenänderungen werden durch Frequenzänderungen entsprechend der Verknüpfung $c_0+v=f_1.\lambda$ bzw. $c_0-v=f_2.\lambda$ kompensiert, worin $c_0$ die Schallfortpflanzungsgeschwindigkeit im ruhenden Fluid ist.

Aus Instruments & Control Systems, Vol. 40 (1967), pp 130 ff, aus IEEE Transact. on Instr. and Measurement, Vol. IM 23, (1974) pp 203 und Ultrasonics, Vol. 10 (1972) p 204 sind Verfahren bekannt, bei denen Impulse von Ultraschallwellen ausgesandt werden. Von Interesse ist dabei allein die Ausstiegsflanke dieser Impulse. Die Frequenz der ausgesandten Ultraschallwellen ist durch den jeweiligen Wandler gegeben, der zur Aussendung angestoßen wird und den man ausschwingen läßt. Die Strömungsgeschwindigkeit v wird aus den nach dem Verfahren ermittelten, vorzusehenden niederfrequenten Taktfrequenzen der Impulse, und zwar für Schallwellen in Richtung und in Gegenrichtung der Strömung ausgewertet.

Der jeweilige Strömungsmeßwert v kann auch durch Ermittlung der Differenzfrequenz zwischen der sich für die eine Meßrichtung ergebenden Frequenz $f_1$ und der sich für die Gegenrichtung ergebenden Frequenz $f_2$ der Ultraschallwellen gewonnen. Etwas derartiges ist in der US—PS 3 751 979 angegeben. Für die aus der Differenzfrequenz $(f_1-f_2)$ zu ermittelnde Strömungsgeschwindigkeit v besteht aber nur dann eine eindeutige Beziehung gemäß $f_1-f_2=2v/\lambda$, wenn sichergestellt ist, daß bei jeder Messung für Hin- und für Gegenrichtung immer wieder jeweils die genau gleiche Anzahl n von Wellenlängen $\lambda$ auf den Meßweg paßt. Dies sicherzustellen wird immer schwieriger, je höher die Zahl n ist, z.B. größer als 10, oder gar im Bereich von 100 bis 1000 liegt. Eine sehr niedrige Zahl n bringt wiederum große Ungenauigkeit der Messung, was ebenfalls hinlänglich bekannt ist.

Es ist eine Aufgabe der vorliegenden Erfindung, ein solches Meßverfahren anzugeben bzw. ein prinzipiell bekanntes Meßverfahren in einer solchen Weise weiterentwickelt auszugestalten, daß sowohl eindeutige Meßwerte der Strömungsgeschwindigkeit zu erzielen sind als auch ein praktisch unbegrenzter Meßbereich zur Verfügung steht.

Diese Aufgabe wird mit einem Verfahren nach Patentanspruch 1 gelöst.

Das neue Verfahren benutzt Prinzipien und Maßnahmen an sich bekannter Art, die jedoch erfindungsgemäß durch entscheidende weitere Maßnahmen so ergänzt werden, daß eine eindeutige Kalibrierung der Messungen gewährleistet ist und mit denen die für bekannte Verfahren zwangsläufige Einschränkung des Meßbereiches aufgehoben ist.

Grundsätzlich betrachtet umfaßt die Erfindung Maßnahmen, mit denen zunächst die Kalibrierung durchgeführt wird, wobei diese Maßnahmen zu Regelspannungswerten führen, die abgespeichert werden. Für die Messungen in Hin- und Gegenrichtung werden unabhängig voneinander Regelspannungswerte erzeugt, die getrennt abgespeichert werden. Mit diesen jeweiligen Regelspannungen wird die Frequenz $f_T$ der Quelle des kontinuierlichen Oszillatorsignals nachgesteuert. Für die eine Meßrichtung ergibt sich dann ein Frequenzwert $f_{T1}$ und für die Gegenrichtung der Frequenzwert $f_{T2}$. Diese Quelle ist im Regelfall ein VCO (voltage controlled oscillator). Weiterhin neu ist, daß aus dem so nachgesteuerten Oszillatorsignal ein Burst-Signal erzeugt wird und erst dieses Burst-Signal dem jeweils als Sender bestimmten Ultraschall-Wandler der Meßstrecke zugeführt wird. Außerdem neu ist, daß das Taktsignal dieses Burst-Signals eine Taktfrequenz $f_B$ hat, die durch Frequenzteilung mit dem Teilungsfaktor N aus der Frequenz des Oszillatorsignals erzeugt worden ist: $f_{T1,2}=N.f_{B1,2}$. Für die Erfindung sind Werte N des Bereiches 10 bis 1000 bevorzugt zu verwenden.

Das beim Start des erfindungsgemäßen Verfahrens jeweils ermittelte Phasenvergleichssignal $\phi_B$ der Phasendifferenz, die zwischen dem Taktsignal und dem demodulierten Empfangssignal des jeweiligen Empfangswandlers der Meßstrecke vorliegt, wird von einem Schleifenfilter (I-Regler) gefiltert und mit einem vorzugebenden Referenzsignal $\phi_0$ verglichen. Das sich aus diesem Vergleich ergebende Ausgangssignal des Schleifenfilters dient als Regelspannung für den VCO als Quelle des Oszillatorsignals, womit die Frequenz $f_T$ jeweils derart nachgesteuert wird, daß $n=N:\phi_0/(2\pi)$ Wellenlängen $\lambda$ auf den Meßweg passen.

Der voranstehend erläuterte, einen Teil der Erfindung bildende Setzvorgang führt zu einer ersten Regelspannung, die zunächst abgespeichert wird. Ein solcher Setzvorgang erfolgt vor allem nach jedem (Neu-)Einschalten des Meßgerätes. Bei der dann nachfolgenden eigentlichen Messung der Strömungsgeschwindigkeit v wird mit dieser Regelspannung eine Start-Frequenz $f_T$ erzeugt, die für diese eine zugehörige Meßrichtung gilt. Der mit dieser Frequenz ausgesandte Ultraschall hat damit in dem strömenden Medium eine eindeutig definierte Wellenlänge $\lambda$ als Kalibrierungsgröße. Die bei den Strömungsgeschwindigkeitsmessungen angestrebte hohe Auflösung wird nach dem Setzvorgang durch ständige Feinabstimmung der Frequenz $f_T$ nach dem bekannten Prinzip der trägerseitigen Phasenregelung erreicht.

Das voranstehend erläuterte Kalibrierungsverfahren wird für Hin- und Gegenrichtung, voneinander getrennt durchgeführt, so daß sich in zwei Setzvorgängen zwei verschiedene Regelspannungen ("erste" Regelspannung und "zweite" Regelspannung) ergeben, nämlich je eine für die betreffende Richtung der Meßstrecke.

Mit Hilfe der Erfindung ist sichergestellt, daß für alle eigentlichen Messungen der augenblicklichen Strömungsgeschwindigkeit v sich eine bestimmte Anzahl n von auf den Meßweg der Länge L passenden Ultraschall-Wellenlängen ergibt. Mit anderen Worten, es ergibt sich eine definierte Wellenlänge $\lambda=L/n$ der im Fluid sich fortpflanzenden Ultraschall-Strahlung. Dies gilt auch bei starker Variation der zu messenden Strömungsgeschwindigkeit v, d.h. bei großen Unterschieden der durch die oben erwähnten Setzvorgänge erzeugten Frequenzen für Hin- und Gegenrichtung. Dies gilt weiterhin, wenn der Abschnitt des erfindungsgemäßen Verfahrens, der die eindeutige Kalibrierung bewirkt (Setzvorgang), bei einer solchen Geschwindigkeit der Strömung des Fluids erfolgt, die sich erheblich von dem Strömungsmeßwert unterscheidet, der dann bei der eigentlichen Strömungsmessung vorliegt.

Mit anderen Worten gesagt, handelt es sich bei der Erfindung um eine Kombination aus Setzvorgängen für die Hin- und die Gegenrichtung und aus dem Verfahren für die eigentliche Strömungsmessung. Gerade diese eigentümliche Kombination löst die Aufgabe, jeweils eindeutige Meßergebnisse für die Strömungsgeschwindigkeit v zu liefern, und zwar innerhalb des Bereiches von der Strömungsgeschwindigkeit v=0 bis zum Wert $v=c_0/2$ (halber Wert der Schallgeschwindigkeit im Fluid), d.h., der Meßbereich weist praktisch keine Begrenzung auf. Insbesondere ist die Eindeutigkeit auch dann gewährleistet, wenn das Meßgerät aus- und wieder eingeschaltet wird.

Entscheidend für die Erfindung ist nicht nur die Idee der Einführung von Setzvorgängen, sondern auch die frequenz- und phasenstarre Verknüpfung des Burst-Taktes der Frequenz $f_B$ (jeweils für Hin- und Gegenrichtung) mit dem kontiniuerlichen Oszillatorsignal der Frequenz $f_T$ (jeweils für Hin- und Gegenrichtung) über die Frequenzteilung gemäß $f_T=N.f_B$. Darin ist N eine nicht notwendigerweise ganze Zahl größer als 1, insbesondere eine Zahl zwischen 10 und 1000. Daraus ergibt sich die für die Erfindung entscheidende eindeutige Verknüpfung der im strömenden Fluid jeweils auftretenden Wellenlänge $\lambda$ (für Hin- und Gegenrichtung) der jeweils ausgesandten Ultraschall-Strahlung mit der Länge L der Meßstrecke (zwischen jeweiligem Sendewandler und jeweiligem Empfangswandler).

Der als Merkmal der Erfindung vorgesehene Setzvorgang gewährleistet, daß bei den für die Ermittlung der Meßwerte v der Strömung nachfolgend vorzunehmenden Einzelmessungen nach dem Prinzip der an sich bekannten trägerseitigen Phasenretigen Phasenregelung, und zwar trotz der für einen unbegrenzten Meßbereich notwendigerweise voneinander völlig unabhängig betriebenen Regelschleifen für Hin- und Gegenrichtung, eine jeweils gleich große Wellenzahl n auf der Meßstrecke eingehalten ist. Die bei der Auswertung bekanntermaßen durchzuführende Differenzbildung (Differenz aus den Frequenzwerten für die eine Richtung und für die Gegenrichtung) führt dann immer zu eindeutigen Ergebnissen.

Es sei darauf hingewiesen, daß bei Durchführung der Erfindung Änderungen der Schallgeschwindigkeit $c_0$ des ruhenden Mediums—solche Änderungen können auf Temperaturänderungen oder zeitlichen Änderungen der stofflichen Zusammensetzung des Fluids beruhen—in praktisch unbegrenztem Ausmaß selbständig kompensiert werden. Dies ist ein weiterer, ganz entscheidender Vorteil, den die Erfindung dem Benutzer zukommen läßt.

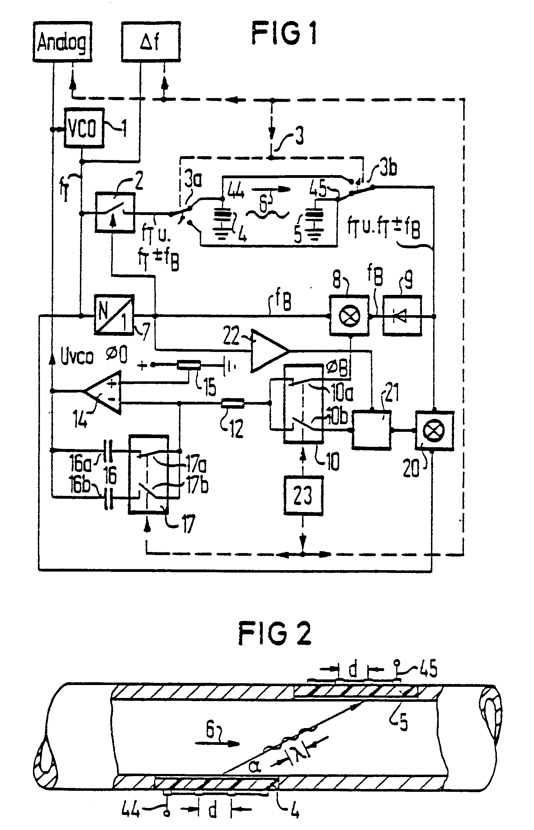

Weitere Einzelheiten der Erfindung werden im Nachfolgenden anhand des beigefügten Fließbildes erläutert, wobei Fig. 1 eine Schaltungsanordnung und Fig. 2 eine Anwendung des erfindungsgemäßen Verfahrens zeigt.

Mit 1 ist in dem Fließbild der Fig. 1 der Oszillator zur Erzeugung des kontinuierlichen Oszillatorsignals bezeichnet. Es ist dies ein steuerbarer Oszillator, z.B. insbesondere ein VCO, der im Betrieb die kontinuierlichen Signale mit den Frequenzen $f_{T1}$ (für die Messung in der einen Richtung) und $f_{T2}$ (für die Messung in der Gegenrichtung) liefert. Das Element 2 ist ein Schalter, der mit einem Taktsignal der Frequenz $f_{B1}$ (bei der Messung in der einen Richtung) bzw. $f_{B2}$ (bei der Messung in der Gegenrichtung) angesteuert wird, und der das aus dem Oszillator 1 kommende kontinuierliche Signal so zerhackt, daß zu jeder der beiden Meßrichtungen ein Sendesignal mit den Frequenz-Seitenbändern $f_T \pm f_B$ vorliegt. Dieses Sendesignal geht jeweils an denjenigen Ultraschall-Wandler, der gerade als Sendewandler (in Fig. 1 Wandler 4) betrieben wird. Für die Umschaltung des Wandlers zwischen Sende- und Empfangsbetrieb ist eine Schaltereinrichtung 3 mit den Schalterfunktionen 3a und 3b vorgesehen. Mit 5 ist der über die Schalterfunktion 3b momentan als Empfangswandler betriebene Ultraschall-Wandler bezeichnet. Zwischen den Wandlern 4 und 5 liegt somit die eigentliche Ultraschall-Meßstrecke im strömenden Fluid 6, und zwar sowohl für die eine Richtung als auch für die Gegenrichtung.

Mit 7 ist ein Frequenzteiler bezeichnet, der die jeweilige Frequenz $f_T$ auf die Frequenz $f_B=f_T/N$ herunterteilt. Dieses Signal mit der Frequenz $f_B$ liegt an dem Schalter 2 und auch an dem Phasenvergleicher 8, dessen zweitem Eingang über einen Amplitudendemodulator 9 die Einhüllende des vom jeweils als Empfangswandler betriebenen Ultraschall-Wandler (in Fig. 1 Wandler 5) empfangenen Signals zugeführt wird. Das Ausgangssignal dieses Phasenvergleichers 8 geht über die Schalterfunktion 10a des Schalters 10 und über einen Widerstand 12 an den invertierenden Eingang eines Operationsverstärkers 14. Dem nicht-invertierenden Eingang dieses Operationsverstärker 14 wird aus einer Referenzspannungsquelle 15 ein vorgebbares Phasenvergleichssignal $\phi_0$ zugeführt. Das Ausgangssignal des Operationsverstärkers 14 geht als Steuersignal mit der in diesem Arbeitsablauf ermittelten (ersten) Regelspannung $U_{VCO}$ an den Oszillator 1. Mit dieser Regelspannung wird die Frequenz des Oszillators solange nachgeregelt, bis das Ausgangssignal $\phi_B$ des Phasenvergleichers 8 mit dem Referenzsignal $\phi_0$ übereinstimmt. Der voranstehend beschriebene Setzvorgang wird damit abgeschlossen, daß in einem (ersten) Speicherkondensator 16a der schließlich geltende (erste) Regelspannungswert gespeichert wird. In dem Schalter 17 ist die Schalterfunktion 17a als geschlossen dargestellt, so daß diese voranstehend angegebene Speicherung im Speicherkondenkondensator 16a tatsächlich erfolgen kann. Die soweit gegebene Beschreibung gilt für die Messung in einer der beiden Richtungen.

Mit der Ablaufsteuerung 23 wird zur Durchführung der Messung für die Gegenrichtung der Schalter 3 umgeschaltet, so daß die der Fig. 1 entgegengesetzten Schalterfunktionen 3a und 3b vorliegen. Außerdem wird mit dieser Ablaufsteuerung auch der Schalter 17 umgeschaltet, so daß die Schalterfunktionen 17a und 17b jeweils zur Darstellung in Fig. 1 entgegengesetzte Stellung haben. Mit diesen neu eingestellten Schalterfunktionen 3a, 3b, 17a, 17b wird nunmehr der Setzvorgang für die Gegenrichtung (Wandler 5 als Sender, Wandler 4 als Empfänger) durchgeführt. Es ergibt sich nunmehr der (zweite) Wert der Regelspannung. Mit dieser Regelspannung wird der zweite Speicherkondensator 16b aufgeladen.

Das Ergebnis dieser Setzvorgänge ist, daß an den Speicherkondensatoren 16a und 16b zwei Regelspannungen für die nachfolgenden eigentlichen Strömungsmessungen vorliegen, und zwar jeweils für die eine Richtung (Wandler 4 als Sender) und für die Gegenrichtung (Wandler 5 als Sender).

Die nach Durchführung der beiden Setzvorgänge erfolgende eigentliche Meßwertermittlung wird mit trägerseitiger Phasenregelung durchgeführt. Es wird hierzu der Schalter 10 umgeschaltet, so daß die Schalterfunktion 10b geschlossen und die Schalterfunktion 10a geöffnet ist. Das vom Empfangswandler 5 (Messung in der einen Richtung) jeweils zu erhaltende Empfangssignal geht an einen Phasendiskriminator 20, dem außerdem das Oszillatorsignal des Oszillators 1 zugeführt wird. Mit der durch das invertierte (Inverter 22) Taktsignal angesteuerten Sample-and-Hold-Schaltung 21 wird das aufgrund des Burst-Betriebs (mit der Taktfrequenz $f_B$) nur jeweils kurzzeitig auswertbare Ausgangssignal des Phasendiskriminators 20 abgetastet. Über die geschlossene Schalterfunktion 10b des Schalters 10 liegt nunmehr das abgetastete Phasensignal am Widerstand 12 d.h. am Eingang des Schliefenfilters. Dadurch, daß Schalter 17 synchron mit Schalter 3 geschaltet wird, d.h. bei jeder Umkehrung der Meßrichtung umgeschaltet wird, wird bei geschlossener Schalterfunktion 17a der erste Regelspannungswert im Speicherkondensator 16a aktualisiert und bei geschlossener Schalterfunktion 17b der zweite Regelspannungswert (für die Gegenrichtung) im Speicherkondensator 16b aktualisiert. Dies erfolgt, bei auch für den Träger der empfangenen Signale mit den Frequenzen $f_{T1}$ und $f_{T2}$ jeweils die Phase $\phi_T = \phi_0$ für jede der beiden Meßrichtungen vorliegt.

Das Meßergebnis, d.h. die dann zu bildende Differenzfrequenz $f_{T1} - f_{T2}$, kann digital entweder durch Vorwärts-Rückwärts-Zählung oder durch Synchronisation zweier unabhängiger Oszillatoren auf die Frequenzen $f_{T1}$ und $f_{T2}$ mit nachträglicher Frequenzmischung (in an sich bekannter Weise) erhalten werden. Aus dem Sprung bzw. Unterschied der Regelspannungswerte der Speicherkondensatoren 16a und 16b—dieser Unterschied tritt beim erwähnten Umschalten der Meßrichtung auf—kann auch ein analoger Meßwert für den Strömungsmeßwert gewonnen werden.

Eine ganz besondere Bedeutung hat die Erfindung im Zusammenhang mit der Benutzung eines Durchfluß-Strömungsmessers nach dem deutschen Patent 30 20 282 (europäisches Patent 0 040 837; US-Patent 4 375 767) bzw. für die Verwendung von Ultraschall-Wandlern mit Interdigitalstruktur, wie sie in diesem Patent beschrieben sind. Es handelt sich dabei um Wandler, die eine Interdigitalstruktur der elektrischen Polarisation und/oder der zur Anregung des Wandlers dienenden Elektroden. Diese Wandler sind zur direkten Ultraschall-Abstrahlung und zum -Empfang in einem vorgebbaren und außerdem elektrisch steuerbaren Winkel zur Oberfläche dieser Wandlerstruktur geeignet.

Nähere Erläuterungen zu einem solchen Wandler sind in der betreffenden Patentschrift ausführlich angebenen.

Ein wichtiges Merkmal des oben beschriebenen, erfindungsgemäßen Verfahrens der vorliegenden Erfindung ist die Wählbarkeit einer bestimmten Wellenlänge $\lambda$ in dem strömenden Medium, und zwar durch Wahl des Teilungsverhältnisses N. Aus den obigen Gleichungen $\lambda = L/n$ und $n = N \cdot \phi_0/2\pi$ ergibt sich beispielsweise für die Referenzphase $\phi_0 = \pi$—es ist dies ist eine besonders praktikable Wahl einer Referenzphase—die Beziehung $\lambda = 2L/N$. Bei einem Wandler mit Interdigitalstruktur gemäß dem älteren Patent hängt die im Winkel $\alpha$ geneigte Abstrahlrichtung von der Wellenlänge $\lambda$ und der Gitterkonstanten bzw. der Periodizitätskonstanten bzw. dem Periodizitätsabstand g wie folgt ab: $\alpha = \arccos(\lambda/g)$.

Bei einem eingebauten Wandlerpaar mit Interdigitalstruktur gemäß dem obengenannten älteren Patent ist im allgemeinen die Größe der Gitterkonstanten g und der Winkel $\alpha_0$ konstruktiv gegeben. Der Winkel $\alpha_0$ ist dabei die Neigung der Verbindungslinie der beiden Wandler des (aus jeweiligem Sendewandler und jeweiligem Empfangswandler bestehenden) Wandlerpaares bezogen auf die Oberfläche der Wandlerstruktur. Für optimale Arbeitsweise, insbesondere beste Signalübertragung, soll der obengenannte Abstrahlwinkel $\alpha$ gleich der somit konstruktiv gegebenen Winkelrichtung $\alpha_0$ sein, wozu hier lediglich gelten muß $N_{opt}=2L/(g.\cos\alpha_0)$. Auf der rechten Seite der Gleichung stehen nur konstruktiv bereits vorgegebene Größen, die den optimalen, zu wählenden Wert für N ergeben. Die Erfindung ist zwar auch für Werte N ausführbar, die von diesem Wert $N_{opt}$ abweichen, jedoch würde diese Abweichung aufgrund unzweckmäßiger Strahlausrichtung zu nicht-optimaler Ultraschall-Übertragung vom Sender zum Wandler führen.

Zum besseren Verständnis des Vorangehenden solle die Fig. 2 dienen, die zwei in die Wand eines Rohrstückes 1 eingebaute Wandler 4 und 5 mit Interdigitalstruktur angibt. Der Winkel $\alpha_0$ ist der erwähnte Winkel der Verbindungslinie 12 zwischen den beiden Wandlern 4 und 5. Die Richtung dieser Verbindungslinie ist die Richtung der optimalen Ultraschall-Übertragung vom Sende- zum Empfangswandler in der einen Richtung und dazu entgegengesetzt in der Gegenrichtung. Mit 6 ist die Richtung einer im Rohr 1 vorliegenden Strömung eines Fluids angedeutet. Mit 44 und 45 ist jeweils der eine elektrische Anschluß des einen Wandlers 4 und des anderen Wandlers 5 angegeben. Der zur Interdigitalstruktur gehörige jeweilige andere Anschluß ist beispielsweise mit Masse verbunden.

**Patentansprüche**

1. Verfahren zur Messung von Strömungsgeschwindigkeit v eines Fluids nach dem Prinzip der Phasen-Nachregelung und Differenzfrequenz-Auswertung;
bei dem die Erzeugung eines kontinuierlichen, elektrischen Oszillatorsignals, das in seiner Oszillatorfrequenz $f_T$ steuerbar ist, erfolgt;
bei dem das von einem ersten Ultraschall-Wandler in das Fluid hinein ausgesandte, die Meßstrecke durchlaufende Ultraschall-Signal mit einem zweiten Ultraschall-Wandler empfangen wird; und
bei dem die durch den ersten und den zweiten Ultraschall gebildete Meßstrecke in Hin- und Gegenrichtung benutzt wird;
gekennzeichnet durch folgende Merkmale:
daß für eindeutige Kalibrierung und für unbegrenzten Meßbereich hinsichtlich der Strömungsgeschwindigkeit v
aus dem erzeugten kontinuierlichen elektrischen Oszillatorsignal der Oszillatorfrequenz $f_T$ durch Schalten mit einem Taktsignal der Taktfrequenz $f_B$ jeweils ein Burst-Signal erzeugt wird;
daß die Taktfrequenz $f_B$ des Taktsignals durch vorgebbare Frequenzteilung mit dem Teilungsfaktor N aus der Frequenz $f_T$ des Oszillatorsignals erzeugt wird;
Anlegen dieses Burst-Signals an den ersten Ultraschall-Wandler der Meßstrecke;
Amplitudendemodulation des mit dem zweiten Ultraschall-Wandler der Meßstrecke empfangenen, die Meßstrecke durchlaufenden Ultraschall-Signals;
Messen des Phasenvergleichssignals $\phi_B$, das zwischen dem Taktsignal und dem demodulierten Empfangssignals vorliegt;
Filtern und Vergleichen des Phasenvergleichsignals $\phi_B$ mit einem vorgebbaren Referenzsignal $\phi_0$ in einem Schliefen-Filter,
Zuführung des Ausgangssignals des Schleifenfilters an den Regeleingang der Quelle für das kontinuierliche elektrische Oszillatorsignal mit der Frequenz $f_T$, und
Abspeichern der sich aus dem erfolgten Ablauf ergebenden ersten Regelspannung für die Nachsteuerung des Frequenzwertes der Oszillatorfrequenz $f_{T1}$ für diese eine Meßrichtung;
dadurch, daß zur vom Voranstehenden unabhängigen Nachsteuerung der Oszillatorfrequenz $f_{T2}$ für die Gegenrichtung zwischen dem zweiten Ultraschall-Wandler und dem ersten Ultraschall-Wandler der voranstehende Verfahrensablauf wiederholt wird, womit sich die für die Gegenrichtung geltende zweite Regelspannung ergibt, die ebenfalls abgespeichert wird; daß für die eigentlichen fortlaufenden Messungen der Strömungsgeschwindigkeit v
für die Messung in der einen Meßrichtung durch jeweils Zuführung der zu dieser Meßrichtung zugehörigen, ermittelten ersten Regelspannung die eine Oszillatorfrequenz $f_{T1}$ und durch jeweils Zuführung der zu der Gegenrichtung zugehörigen, ermittelten zweiten Regelspannung für die Gegenrichtung die andere Oszillatorfrequenz $f_{T2}$ erzeugt wird; und
daß das für die Ermittlung der jeweiligen Strömungsmeßwerte v an sich bekannte trägerseitige Phasenregelprinzip für jede der beiden Meßrichtungen mit der jeweils zugehörigen Oszillatorfrequenz separat durchgeführt wird.
2. Verfahren nach Anspruch 1, gekennzeichnet dadurch, daß die Referenzphase $\phi_0=\pi$ gewählt wird.

**Revendications**

1. Procédé pour mesurer la vitesse d'écoulement v d'un fluide selon le principe de l'asservissement de phase et de l'évaluation de la fréquence différentielle, et selon lequel
un oscillateur produit un signal électrique continu, dont la fréquence $f_T$ est commandable;
le signal ultrasonore émis par un premier transducteur à ultrasons dans le fluide et traversant la section de mesure est reçu par un second transducteur à ultrasons; et
la section de mesure formée par les premier et second transducteurs à ultrasons est utilisée dans le sens aller et dans le sens opposé;
caractérisé par les particularités suivantes:

pour un calibrage net et pour une plage de mesure illimitée concernant la vitesse d'écoulement v,

un signal respectif de salve est produit à partir du signal électrique continu produit par l'oscillateur et possédant la fréquence $f_T$, par commutation avec un signal de cadence possédant la fréquence de cadence $f_B$;

la fréquence de cadence $f_B$ du signal de cadence est produite au moyen d'une division prédéterminée de la fréquence par le facteur de division N à partir de la fréquence $f_T$ du signal de l'oscillateur;

application de ce signal de salve au premier transducteur à ultrasons dans la section de mesure;

modulation d'amplitude du signal ultrasonore reçu par le second transducteur à ultrasons de la section de mesure et traversant cette dernière;

mesure du signal de comparaison de phase $\phi_B$, qui est présent entre le signal de cadence et le signal de réception démodulé;

filtrage et comparaison du signal de comparaison de phase $\phi_B$ à un signal de référence $\phi_0$ pouvant être prédéterminé, dans un filtre en boucle,

envoi du signal de sortie du filtre en boucle à une entrée de régulation de la source pour le signal électrique continu de l'oscillateur possédant la fréquence $f_C$, et

mémorisation de la première tension de régulation, obtenue à partir du cycle exécuté, pour l'asservissement de la valeur de la fréquence $f_{T1}$ de l'oscillateur pour un sens de mesure,

le cycle opératoire précédent est répété pour l'asservissement, indépendamment de ce qui précède, de la fréquence $f_T$ de l'oscillateur pour le sens opposé entre le second transducteur à ultrasons et le premier transducteur à ultrasons, ce qui fournit une seconde tension de régulation valable pour le sens opposé et qui est également mémorisée; pour la poursuite des mesures proprement dites de la vitesse d'écoulement v

pour la mesure dans un sens de mesure, une fréquence $f_{T1}$ de l'oscillateur est produite au moyen de l'envoi respectif de la première tension de régulation déterminée, associée à ce sens de mesure et l'autre fréquence $f_{T2}$ de l'oscillateur est produite au moyen de l'envoi respectif de la seconde tension de régulation déterminée, associée au sens opposé, pour cette direction; et

le principe de régulation de phase côté porteuse, qui est connu en soi, pour la détermination des valeurs respectives de mesure d'écoulement v, est mis en oeuvre séparément pour chacun des deux sens de mesure avec la fréquence respectivement associée de l'oscillateur.

2. Procédé suivant la revendication 1, caractérisé par le fait qu'on choisit comme phase de référence $\phi_0 = p$.

**Claims**

1. Method of measuring the flow velocity v of a fluid according to the principle of phase readjustment and difference frequency evaluation

in which generation takes place of a continuous, electric oscillator signal whose oscillator frequency $f_T$ can be controlled;

in which the ultrasonic signal, which is emitted from a first ultrasonic transducer into the fluid and traverses the measuring distance, is received by a second ultrasonic transducer; and

in which the measuring distance formed by the first and the second ultrasound is used in the forward and reverse direction

characterized by the following features: that for unambiguous calibration and for an unlimited measuring range with reference to the flow velocity v

a burst signal is generated in each case from the generated continuous electric oscillator signal of oscillator frequency $f_T$ by switching with a clock signal of clock frequency $f_B$;

that the clock frequency $f_B$ of the clock signal is generated by predeterminable frequency division with the division factor N from the frequency $f_T$ fo the oscillator signal;

application of said burst signal to the first ultrasonic transducer of the measuring distance;

amplitude modulation of the ultrasonic signal which is received by the second ultrasonic transducer of the measuring distance and traverses the measuring distance;

measurement of the phase comparison signal $\phi_B$, which is present between the clock signal and the demodulated received signal;

filtering and comparison of the phase comparison signal $\phi_B$ with a predeterminable reference signal $\phi_0$ in a loop filter,

feeding the output signal of the loop filter to the control input of the source for the continuous electric oscillator signal with the frequency $f_T$, and

storing the first control voltage, resulting from the completed cycle, for trimming the frequency value of the oscillator frequency $f_{T1}$ for this one measuring direction;

that, for the purpose of trimming the oscillator frequency $f_{T2}$ for the reverse direction independently of the preceding one, the preceding cycle of the method is repeated between the second ultrasonic transducer and the first ultrasonic transducer thus resulting in the second control voltage holding for the reverse direction, which is likewise stored;

that for the actual continuous measurements of the flow velocity v, for measuring in the one measuring direction, the one oscillator frequency $f_{T1}$ is generated by respectively feeding the first control voltage determined, which is associated with said measuring direction, and for the reverse direction the other oscillator frequency $f_{T2}$ is generated by respectively feeding the second control voltage determined, which is associated with the reverse direction; and

that the carrier-side phase control principle known per se for determining the respective measured flow values v is implemented separately for each of the two measuring directions with the respective associated oscillator frequency.

2. Method according to Claim 1, characterized in that the reference phase is chosen to be $\phi_0 = \pi$.

EP 0 171 067 B1

FIG 1

FIG 2